# EUROPÄISCHE PATENTSCHRIFT

(11) **EP 0 896 906 B1**
(45) Veröffentlichungstag und Bekanntmachung des Hinweises auf die Patenterteilung: **12.11.2003**
(21) Anmeldenummer: 98113732.6
(22) Anmeldetag: 23.07.1998
(51) Int. Cl.: B60R 16/02, G08C 17/04

(54) **Vorrichtung zur Versorgung einer elektrischen Einrichtung in Kraftfahrzeugen**
Vehicle electric installation supply device
Dispositif pour l'alimentation d'une installation électrique dans des vehicules

(30) Priorität: 12.08.1997 DE 19734749
(43) Veröffentlichungstag der Anmeldung: 17.02.1999
(73) Patentinhaber: Schefenacker Vision Systems Germany GmbH & Co. KG, 73730 Esslingen (DE)
(72) Erfinder: Weiss, Achim, 75038 Oberderdingen (DE); Haf, Helmut, 71409 Schwaikheim (DE)
(74) Vertreter: Jackisch-Kohl, Anna-Katharina

(56) Entgegenhaltungen:
- EP-A- 0 668 192
- EP-A- 0 679 554
- DE-A- 19 541 998
- US-A- 5 056 905

## Beschreibung

Die Erfindung betrifft eine Vorrichtung zur Versorgung einer elektrischen Einrichtung in Kraftfahrzeugen nach dem Oberbegriff des Anspruches 1.

Es ist bekannt, beispielsweise Außenrückblickspiegel, Innenrückblickspiegel, Leseleuchten, Garagentore und dergleichen elektrisch zu betätigen. Die entsprechenden Einrichtungen sind über Kabel an das Bordnetz des Kraftfahrzeuges angeschlossen. Um die verschiedenen elektrischen Einrichtungen mit Strom zu versorgen, ist eine aufwendige Verkabelung im Kraftfahrzeug notwendig. Je nach Anordnung dieser mit Energie zu versorgenden Einrichtungen können die Kabel im Kraftfahrzeug nur so verlegt werden, daß sie zumindest teilweise sichtbar sind. Solche Kabel wirken störend im Kraftfahrzeug.

Bei der gattungsgemäßen Vorrichtung (EP-A-0 668 192) überträgt das Sendeteil Energie und Daten drahtlos an das Empfängerteil. Das Sendeteil ist dabei an das Bordnetz des Kraftfahrzeuges angeschlossen. Mit der Vorrichtung werden Daten und Energie innerhalb des Fahrzeuges ausgetauscht, und zwar vom Lenkrad auf stationäre Baugruppen des Fahrzeuges. Dadurch ist der Einsatzbereich der Vorrichtung beschränkt.

Aus der EP-A-0 670 554 ist eine Vorrichtung bekannt, mit der bei einer Fahrzeugkollision ein Signal zum Auslösen eines in der Lenkradsäule des Fahrzeuges untergebrachten Airbags erzeugt wird.

Der Erfindung liegt die Aufgabe zugrunde, die gattungsgemäße Vorrichtung so auszubilden, daß die elektrisch anzusteuernden Einrichtungen einfach mit der notwendigen Energie und den notwendigen Daten versorgt werden können.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind das Sendeteil und das Empfängerteil jeweils mit einer Sende-/Empfangsantenne versehen. Die vom Sendeteil ausgesandten Daten werden von der zweiten Sende-/Empfangsantenne des Empfängerteiles erfaßt und zur Ansteuerung der vorgesehenen Funktion herangezogen. Mit dem Quarzsender wird die Systemfrequenz erzeugt. Der nachgeschaltete Modulator des Sendeteiles setzt die Sendedaten auf das Energiesignal auf. Die von der zweiten Sende-/Empfangsantenne des Empfängerteiles empfangenen Signale werden durch dessen Demodulator in Daten und Energie getrennt. Mit dem Modulator des Empfängerteiles werden die zu übertragenden Antwortdaten in die zweite Sende/Empfangsantenne des Empfängerteiles eingespeist. Der Modulator im Sendeteil erzeugt für den Modulator im Empfängerteil ein Referenzsignal, um sicherzustellen, daß die Datenfrequenzen einander nicht stören. Um eine gegenseitige Störung auszuschalten, sind die Frequenzen für die Sende- und die Antwortdaten unterschiedlich. Da die Energie drahtlos übertragen wird, ist eine elektrische Verbindung lediglich zwischen dem Sendeteil und dem Bordnetz des Kraftfahrzeuges notwendig. Das Empfängerteil ist nicht an das Bordnetz des Kraftfahrzeuges angeschlossen, da es die notwendige Energie drahtlos vom Sendeteil erhält. Dadurch wird eine aufwendige und zum Teil störende Verkabelung im Kraftfahrzeug vermieden. Während der Energieübertragung vom Sendeteil zum Empfängerteil werden gleichzeitig die Daten zwischen der zu versorgenden Elektronik und dem Bordnetz des Kraftfahrzeuges übertragen. Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Vorrichtung,

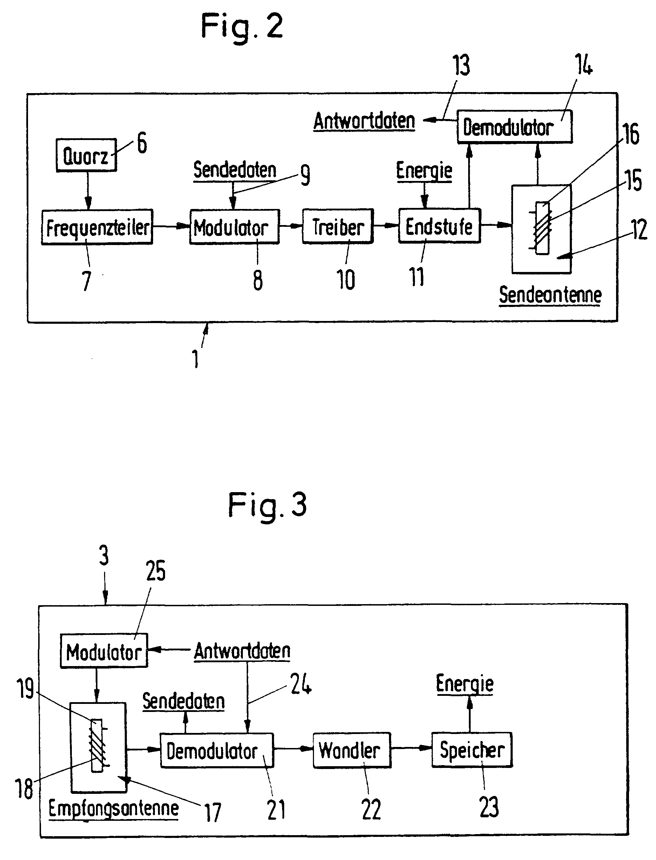

- Fig. 2: in einem Blockdiagramm ein Sendeteil der erfindungsgemäßen Vorrichtung,
- Fig. 3: in einem Blockdiagramm ein Empfängerteil der erfindungsgemäßen Vorrichtung.

Die Vorrichtung ist eine Übertragungseinrichtung, die in einem Kraftfahrzeug vorgesehen ist und dazu dient, Energie drahtlos zu übertragen. Im dargestellten Ausführungsbeispiel ist das Sendeteil 1 der Übertragungseinrichtung im Fahrzeughimmel 2 und ein Empfängerteil 3 im Innenrückblickspiegel 4 des Kraftfahrzeuges untergebracht. Das Sendeteil 1 und das Empfängerteil 3 können selbstverständlich auch an jeder anderen geeigneten Stelle am Kraftfahrzeug vorgesehen sein. Mit der Übertragungseinrichtung werden Energie und Daten drahtlos übertragen. Im dargestellten Ausführungsbeispiel werden die Energie und die Daten zu dem an einer Frontscheibe 5 des Kraftfahrzeuges befestigten Innenrückblickspiegel 4 übertragen, um in diesem verschiedene elektrische Systeme, wie zum Beispiel ein EC-Glas, eine elektrische Spiegelverstellung, eine Kulissenbeleuchtung, einen Garagentoröffner und dergleichen zu betreiben. Zur Funktion dieser Systeme ist es notwendig, während der Energieübertragung gleichzeitig Daten zwischen der zu versorgenden Elektronik und dem Bordnetz des Kraftfahrzeuges auszutauschen.

Das Sendeteil 1 und das Empfängerteil 3 sind so zueinander angeordnet, daß die drahtlose Übertragung zuverlässig erfolgen kann.

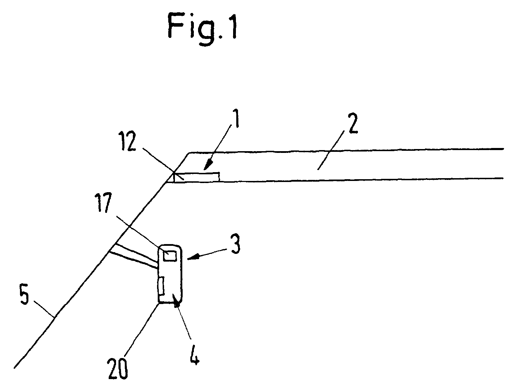

Das Sendeteil 1 hat einen Quarz 6, dem ein Frequenzteiler 7 nachgeschaltet ist. Der Quarz 6 erzeugt die Systemfrequenz, die durch den Frequenzteiler 7 in eine Energiefrequenz und eine Datenfrequenz aufbereitet wird. Ein nachfolgender Modulator 8 setzt Sendedaten 9 auf das Energiesignal auf, wahlweise in Amplituden- oder in Frequenzmodulation. Das Ausgangssignal des Modulators 8 wird über einen Treiber 10 und eine Endstufe 11 auf eine Sendeantenne 12 übertragen. Sie dient gleichzeitig als Empfangsantenne für Antwortdaten 13. Wie Fig. 1 zeigt, ist die Sendeantenne 12 im Fahrzeughimmel 2 vorgesehen. Über einen Demodulator 14 werden die Antwortdaten ausgefiltert. Für die Verarbeitung der Daten ist eine übergeordnete Elektronik vorgesehen. Die Sendeantenne 12 hat eine Spule 15 mit einem Ferritschalenkern 16. Die Spule 15 kann auch eine Folienspule sein, die mit einer Ferritplatte verbunden ist.

Das Empfängerteil 3 hat eine Empfangsantenne 17, die eine Spule 18 mit einem Ferritschalenkern 19 aufweist. Auch die Spule 18 kann eine Ferritspule sein, die mit einer Ferritplatte verbunden ist. Die Empfangsantenne 17 ist in einem Spiegelgehäuse 20 des Innenrückblickspiegels 4 untergebracht. Die von der Empfangsantenne 17 empfangenen Signale werden durch einen nachfolgenden Demodulator 21 in Daten und Energie getrennt. Die Daten stehen einer übergeordneten Elektronik zur Verfügung. Die Energie wird in einen Wandler 22 geleitet, in dem sie in Gleichspannung, vorzugsweise 5 V oder 12 V, umgewandelt wird. Die Ausgangsspannung des Wandlers 22 ist nur von dessen technischen Daten abhängig. Um Schwankungen in der Ausgangsleistung zu unterdrücken und Leistungsspitzen der zu versorgenden Elektronik zu puffern, ist dem Wandler 22 ein Speicher 23 nachgeschaltet. Er kann ein Dünnfilmkondensator mit einer Kapazität > 1 F, ein NiMH- oder ein Lithium-lonen-Akku mit Ladekontrolle sein. Im Speicher 23 wird die Energie gespeichert.

Die zu übertragenden Antwortdaten 24 werden mittels eines Modulators 25 in die Empfangsantenne 17 eingespeist.

Die Frequenzen für die Sendedaten und die Antwortdaten sind verschieden, so daß eine gegenseitige Störung nicht erfolgen kann. Der Modulator 8 im Sendeteil 1 erzeugt für den Modulator 25 im Empfängerteil 3 ein Referenzsignal, um sicherzustellen, daß die Datenfrequenzen einander nicht stören. Die Endstufe 11 im Sendeteil 1 ist vorzugsweise eine gesteuerte Endstufe, deren Leistung nach Rückmeldung des Empfängerteiles 3 angepaßt wird.

Das Sendeteil 1 ist an das Bordnetz des Kraftfahrzeuges angeschlossen. Zur Betätigung der Sendeantenne 12 ist beispielsweise ein am Armaturenbrett des Kraftfahrzeuges vorhandener Schalter vorgesehen, der zum Auslösen einer elektrischen Funktion, beispielsweise zur Verstellung des Spiegelglases des Innenrückblickspiegels 4, betätigt wird. Die vom Sendeteil 1 ausgesandten Daten werden von der Empfangsantenne 17 des Empfängerteiles 3 erfaßt und zur Ansteuerung der vorgesehenen Funktionen herangezogen

Auf diese Weise können elektrische Funktionen von Bauteilen im Kraftfahrzeug ausgelöst werden, deren Anschluß an das Bordnetz nur durch technischen Aufwand oder durch vom Design nicht gewünschte sichtbare Kabel bislang möglich gewesen ist. Lediglich das Sendeteil 1 ist über Kabel an das Bordnetz des Kraftfahrzeuges angeschlossen. Diese Kabel können optimal im Fahrzeug untergebracht werden, insbesondere derart, daß sie nicht stören. Die Weiterleitung der Daten vom Sendeteil 1 an das Empfängerteil 3 erfolgt drahtlos. Während der Energieübertragung werden auch Daten zwischen der zu versorgenden Elektronik und dem Bordnetz des Kraftfahrzeuges ausgetauscht, so daß die entsprechenden angesteuerten Bauelemente die gewünschte Funktion ausführen. So ist es beispielsweise auch möglich, im Kraftfahrzeug eine Einrichtung vorzusehen, mit der automatisch Mautgebühren erfaßt werden können.

## Patentansprüche

1. Vorrichtung zur Versorgung einer elektrischen Einrichtung in Kraftfahrzeugen, mit einem Sendeteil (1), das Energie und Daten drahtlos an ein Empfängerteil (3) überträgt und an ein Bordnetz des Kraftfahrzeuges angeschlossen ist,
daß das Sendeteil (1) mindestens eine erste Sende-/Empfangsantenne (12) und einen Quarzsender (6), der eine Systemfrequenz erzeugt, aufweist,
dem Quarzsender dabei ein Modulator (8) nachgeschaltet ist, der Sendedaten auf das Energiesignal aufsetzt,
daß das Empfängerteil (3) mindestens eine zweite Sende/Empfangsantenne (17) und einen Demodulator (21) aufweist, der die von der zweiten Sende-/Empfangsantenne (17) empfangenen Signale in Daten und Energie trennt,
daß das Empfängerteil (3) einen Modulator (25) aufweist, der die zu übertragenden Antwortdaten in die zweite Sende/Empfangsantenne (17) einspeist,
**dadurch gekennzeichnet,**
**daß** die Frequenzen für die Sende- und Antwortdaten unterschiedlich sind, und um dies sicherzustellen, der Modulator (8) des Sendeteiles (1) für den Modulator (25) des Empfängerteiles (3) ein Referenzsignal erzeugt.

2. Vorrichtung nach Anspruch 1,
**dadurch gekennzeichnet, daß** die erste Sende/Empfangsantenne (12) eine Spule (15) mit einem Ferritschalenkern (16) aufweist.

3. Vorrichtung nach Anspruch 2,
**dadurch gekennzeichnet, daß** die Spule (15) eine Folienspule ist und mit einer Ferritplatte verbunden ist.

4. Vorrichtung nach einem der Ansprüche 1 bis 3,
**dadurch gekennzeichnet, daß** die zweite Sende/Empfangsantenne (17) eine Spule (18) mit einem Ferritschalenkern (19) aufweist.

5. Vorrichtung nach Anspruch 4,
**dadurch gekennzeichnet, daß** die Spule (18) eine Folienspule ist und mit einer Ferritplatte verbunden ist.

6. Vorrichtung nach einem der Ansprüche 1 bis 5,
**dadurch gekennzeichnet, daß** dem Quarzsender (6) ein Frequenzteiler (7) nachgeschaltet ist.

7. Vorrichtung nach Anspruch 6,
**dadurch gekennzeichnet, daß** zwischen dem Frequenzteiler (7) und dem Verstärker (10, 11) der Modulator (8) des Sendeteiles (1) angeordnet ist.

8. Vorrichtung nach einem der Ansprüche 1 bis 7,
**dadurch gekennzeichnet, daß** zur Ausfilterung der Antwortdaten ein Demodulator (14) im Sendeteil (1) vorgesehen ist.

9. Vorrichtung nach einem der Ansprüche 1 bis 8,
**dadurch gekennzeichnet, daß** zur Verarbeitung der Daten des Sendeteiles (1) eine übergeordnete Elektronik vorgesehen ist.

10. Vorrichtung nach einem der Ansprüche 1 bis 9,
**dadurch gekennzeichnet, daß** die Daten des Empfängerteiles (3) einer übergeordneten Elektronik zugeführt werden.

11. Vorrichtung nach einem der Ansprüche 1 bis 10,
**dadurch gekennzeichnet, daß** dem Demodulator (21) des Empfängerteiles (3) ein Wandler (22) nachgeschaltet ist, der die Energie in Gleichspannung umwandelt.

12. Vorrichtung nach Anspruch 11,
**dadurch gekennzeichnet, daß** dem Wandler (22) ein Speicher (23) nachgeschaltet ist.

13. Vorrichtung nach Anspruch 12,
**dadurch gekennzeichnet, daß** der Speicher (23) ein Kondensator, vorzugsweise ein Dünnfilmkondensator, ist.

14. Vorrichtung nach Anspruch 12,
**dadurch gekennzeichnet, daß** der Speicher (23) ein Nickelmetallhydrid-Akku ist.

15. Vorrichtung nach Anspruch 12,
**dadurch gekennzeichnet, daß** der Speicher (23) ein Lithiumionen-Akku ist.

16. Vorrichtung nach einem der Ansprüche 1 bis 15,
**dadurch gekennzeichnet, daß** zumindest die erste Sende/Empfangsantenne (12), vorzugsweise das gesamte Sendeteil (1), im Dachhimmel des Kraftfahrzeuges untergebracht ist.

17. Vorrichtung nach einem der Ansprüche 1 bis 16,
**dadurch gekennzeichnet, daß** zumindest die zweite Sende/Empfangsantenne (17), vorzugsweise das gesamte Sendeteil (3), im Innenrückblickspiegel (4) untergebracht ist.

18. Vorrichtung nach Anspruch 17,
**dadurch gekennzeichnet, daß** die zweite Sende/Empfangsantenne (17) im Spiegelgehäuse (20) des Innenrückblickspiegels (4) untergebracht ist.

## Claims

1. Device for supplying an electrical device in vehicles, having a transmitter part (1) which transmits energy and data in a wire free fashion to a receiver part (3) and is connected to an on-board power system of the motor vehicle, the transmitter part (1) having at least a first transmission/reception antenna (12) and a quartz transmitter (6) which generates a system frequency, a modulator (8) which superimposes transmission data on the energy signal being connected downstream of the quartz transmitter here, the receiver part (3) having at least a second transmission/reception antenna (17) and a demodulator (21) which separates the signals received from the second transmission/reception antenna (17) into data and energy, the receiver part (3) having a modulator (25) via which the response data to be transmitted is fed into the second transmission/reception antenna (17), **characterized in that** the frequencies for the transmission data and response data are different, and in order to ensure this the modulator (8) of the transmitter part (1) generates a reference signal for the modulator (25) of the receiver part (3).

2. Device as claimed in Claim 1, **characterized in that** the first transmission/reception antenna (12) has a coil (15) with a ferrite shell core (16).

3. Device according to Claim 2, **characterized in that** the coil (15) is a film coil and is connected to a ferrite plate.

4. Device according to one of Claims 1 to 3, **characterized in that** the second transmission/reception antenna (17) has a coil (18) with a ferrite shell core (19).

5. Device according to Claim 4, **characterized in that** the coil (18) is a film coil and is connected to a ferrite plate.

6. Device according to one of Claims 1 to 5, **characterized in that** a frequency divider (7) is connected downstream of the quartz transmitter (6).

7. Device according to Claim 6, **characterized in that** the modulator (8) of the transmitter part (1) is arranged between the frequency divider (7) and the amplifier (10, 11),

8. Device according to one of Claims 1 to 7, **characterized in that** a demodulator (14) is provided in the transmitter part (1) in order to filter out the response data.

9. Device according to one of Claims 1 to 8, **characterized in that** superordinate electronics are provided for processing the data of the transmitter part (1).

10. Device according to one of Claims 1 to 9, **characterized in that** the data of the receiver part (3) are fed to superordinate electronics.

11. Device according to one of Claims 1 to 10, **characterized in that** a transducer (22) which converts the energy into DC voltage is connected downstream of the demodulator (21) of the receiver part (3).

12. Device according to Claim 11, **characterized in that** a memory (23) is connected downstream of the transducer (22).

13. Device according to Claim 12, **characterized in that** the memory (23) is a capacitor, preferably a thin film capacitor.

14. Device according to Claim 12, **characterized in that** the memory (23) is a nickel metal hydride accumulator.

15. Device according to Claim 12, **characterized in that** the memory (23) is a lithium ion accumulator.

16. Device according to one of Claims 1 to 15, **characterized in that** at least the first transmission/reception antenna (12), preferably the entire transmitter part (1), is accommodated in the inner roof lining of the motor vehicle.

17. Device according to one of Claims 1 to 16, **characterized in that** at least the second transmission/reception antenna (17), preferably the entire transmitter part (3), is accommodated in the interior rear view mirror (4).

18. Device according to Claim 17, **characterized in that** the second transmission/reception antenna (17) is accommodated in the mirror housing (20) of the interior rear view mirror (4).

## Revendications

1. Dispositif pour l'alimentation d'un dispositif électrique dans des véhicules automobiles, comportant une partie d'émission (1), qui transmet une énergie et des données sans fil à une partie de réception (3) et est raccordée à un réseau de bord du véhicule automobile, et dans lequel
la partie d'émission (1) comporte au moins une première antenne d'émission/réception (12) et un émetteur à quartz (6), qui produit une fréquence du système,
en aval de l'émetteur à quartz est branché un modulateur (8), qui applique des données d'émission sur le signal d'énergie,
la partie de réception (3) comporte au moins une seconde antenne d'émission/réception (17) et un modulateur (21), qui sépare les signaux reçus par la seconde antenne d'émission/réception (17), en des données et en une énergie,
la partie de réception (3) possède un modulateur (25) qui envoie les données de réponse à transmettre, à la seconde antenne d'émission/réception (17),
**caractérisé en ce**
**que** les fréquences sont différentes pour les données d'émission et pour les données de réponse, et pour garantir cela, le modulateur (8) de la partie d'émission (1) produit un signal de référence pour le modulateur (25) de la partie de réception (3).

2. Dispositif selon la revendication 1, **caractérisé en ce que** la première antenne d'émission/réception (12) comporte une bobine (15) possédant un noyau en pot en ferrite (16).

3. Dispositif selon la revendication 2, **caractérisé en ce que** la bobine (15) est une bobine formée d'une feuille et est reliée à une plaque de ferrite.

4. dispositif selon l'une des revendications 1 à 3, **caractérisé en ce que** la seconde antenne d'émission/réception (17) comporte une bobine (18) possédant un noyau en pot en ferrite (19).

5. Dispositif selon la revendication 4, **caractérisé en ce que** la bobine (18) est une bobine formée d'une feuille et est reliée à une plaque de ferrite.

6. Dispositif selon l'une des revendications 1 à 5, **caractérisé en ce qu'**un diviseur de fréquence (7) est branché en aval de l'émetteur à quartz (6).

7. Dispositif selon la revendication 6, **caractérisé en ce que** le modulateur (8) de la partie d'émission (1) est disposé entre le diviseur de fréquence (7) et l'amplificateur (10, 11).

8. Dispositif selon l'une des revendications 1 à 7, **caractérisé en ce qu'**un démodulateur (14) est prévu dans la partie d'émission (1) pour séparer par filtrage les données de réponse.

9. Dispositif selon l'une des revendications 1 à 8, **caractérisé en ce qu'**un système électronique de rang supérieur est prévu pour le traitement des données de la partie d'émission (1).

10. Dispositif selon l'une des revendications 1 à 9, **caractérisé en ce que** les données de la partie de réception (3) sont envoyées à un système électronique de rang supérieur.

11. Dispositif selon l'une des revendications 1 à 10, **caractérisé en ce qu'**en aval du démodulateur (21) de la partie de réception (3) est branché un convertisseur (22) qui convertit l'énergie en une tension continue.

12. Dispositif selon la revendication 1, **caractérisé en ce qu'**un accumulateur (23) est branché en aval du convertisseur (22).

13. Dispositif selon la revendication 12, **caractérisé en ce que** l'accumulateur (23) est un condensateur, de préférence un condensateur à couche mince.

14. Dispositif selon la revendication 12, **caractérisé en ce qu'**accumulateur (23) est un accumulateur à nickel-hydrure métallique.

15. Dispositif selon la revendication 12, **caractérisé en ce que** l'accumulateur (23) est un accumulateur à ions lithium.

16. Dispositif selon l'une des revendications 1 à 15, **caractérisé en ce qu'**au moins la première antenne d'émission/réception (12), de préférence l'ensemble de la partie d'émission (1), est logée dans le toit du véhicule automobile.

17. Dispositif selon l'une des revendications 1 à 16, **caractérisé en ce qu'**au moins la seconde antenne d'émission/réception (17) et de préférence l'ensemble de la partie d'émission (3), est logé dans le rétroviseur intérieur (4).

18. Dispositif selon la revendication 17, **caractérisé en ce que** la seconde antenne d'émission/réception (17) est logé dans le boîtier (20) du rétroviseur intérieur (4).
